(19) Europäisches Patentamt
European Patent Office
Office européen des brevets

(11) **EP 2 042 918 A1**

(12) **EUROPEAN PATENT APPLICATION**
published in accordance with Art. 153(4) EPC

(43) Date of publication:
**01.04.2009 Bulletin 2009/14**

(51) Int Cl.:
*G02F 1/37* (2006.01)  *G01N 21/39* (2006.01)

(21) Application number: **07767276.4**

(22) Date of filing: **20.06.2007**

(86) International application number:
**PCT/JP2007/062438**

(87) International publication number:
**WO 2008/010380 (24.01.2008 Gazette 2008/04)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **18.07.2006 JP 2006195928**

(71) Applicant: **Nippon Telegraph & Telephone Corporation
Tokyo 100-8116 (JP)**

(72) Inventors:
• **MAGARI, Katsuaki**
**Musashino-shi**
**Tokyo 180-8585 (JP)**
• **YANAGAWA, Tsutomu**
**Musashino-shi**
**Tokyo 180-8585 (JP)**

• **NISHIDA, Yoshiki**
**Musashino-shi**
**Tokyo 180-8585 (JP)**
• **TADANAGA, Osamu**
**Musashino-shi**
**Tokyo 180-8585 (JP)**
• **ASOBE, Masaki**
**Musashino-shi**
**Tokyo 180-8585 (JP)**
• **UMEKI, Takeshi**
**Musashino-shi**
**Tokyo 180-8585 (JP)**
• **SUZUKI, Hiroyuki**
**Musashino-shi**
**Tokyo 180-8585 (JP)**

(74) Representative: **TBK-Patent
Bavariaring 4-6
80336 München (DE)**

(54) **LIGHT SOURCE AND GAS MEASURING DEVICE**

(57) A light source is provided that realizes a single spectral linewidth having a half value width of 1MHz or less and that is not influenced by the ambient temperature. A light source includes first laser (71) generating first laser light, second laser (12) generating second laser light, and nonlinear optical crystal (13) wherein the first laser light and the second laser light are injected into the nonlinear optical crystal to generate coherent light by the generation of a difference frequency or a sum frequency. The second laser (12) is a wavelength-tunable light source that includes therein a diffraction grating and that can sweep the wavelength of the second laser light. The first laser (71) is composed of semiconductor laser and a fiber grating that has a reflection bandwidth narrower than a resonance wavelength spacing determined by the laser chip length of the semiconductor laser.

**FIG.9**

EP 2 042 918 A1

**Description**

TECHNICAL FIELD

The present invention relates to a light source and a gas measuring device. In particular, the present invention relates to a light source that outputs mid-infrared light having a single spectral linewidth and a gas measuring device using this light source.

BACKGROUND ART

In recent years, a global environmental problem has attracted attention, showing the significance of the measurement of environment gas. Many types of environment gas have, in a mid-infrared range of a wavelength of $2\mu m$ or more, fundamental vibration or an absorption line of a harmonic overtone of the low order thereof. Thus, there has been an increasing demand for a mid-infrared light source that generates a high output of coherent light in a mid-infrared range. One of known light sources of this type is a wavelength conversion device using the generation of a second harmonic, a sum frequency, and a difference frequency by a pseudo phase matching that is one type of a second-order nonlinear optical effect for example (see Patent Publication 1 for example).

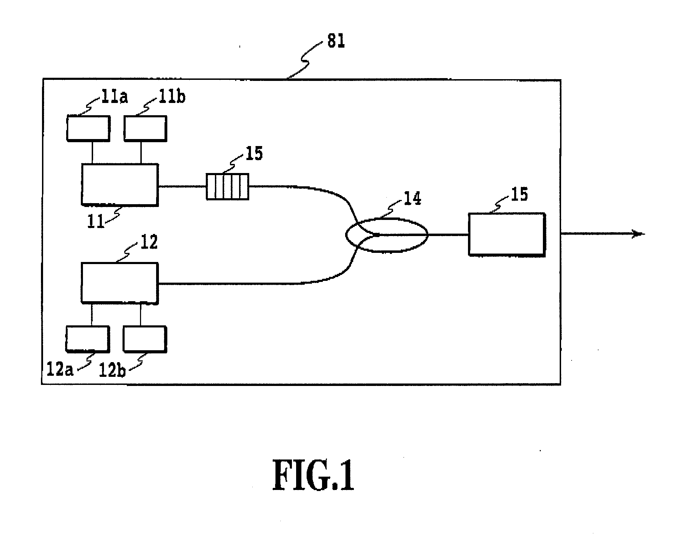

Fig. 1 illustrates the configuration of a conventional wavelength conversion apparatus using a pseudo phase matching-type wavelength conversion device. The wavelength conversion apparatus is composed of: a semiconductor laser 11 for outputting excitation light A of a wavelength $\lambda_A$; a semiconductor laser 12 for outputting signal light B of the wavelength $\lambda_B$; a optical coupler 14 for multiplexing the excitation light A with the signal light B to output the multiplexed light; and a wavelength conversion device 13 consisting of nonlinear optical crystal wherein the multiplexed excitation light A and signal light B are injected into the wavelength conversion device 13 to generate converted light C of a wavelength $\lambda_C$. The semiconductor lasers 11 and 12 are connected to driving circuits 11a and 12a and temperature control circuits 11b and 12b, respectively. The semiconductor laser 11 and the optical coupler 14 have therebetween a fiber grating 15.

The converted light C has an intensity that is proportional to the product of the intensities of the excitation light A and the signal light B. Thus, by allowing the excitation light A to have a fixed intensity, the signal light B can be converted to the converted light C so that only the wavelength is converted. In the case of $\lambda_A=0.976\mu m$ and $\lambda_B=1.307\mu m$ for example, the sum frequency of $\lambda_C=0.559\mu m$ is obtained. When $\lambda_A=1.064\mu m$ and $\lambda_B=1.567\mu m$, the difference frequency of $\lambda_C=3.31\mu m$ is obtained. Thus, in order to obtain a specific wavelength, the wavelengths of the excitation light A and the signal light B must be controlled strictly.

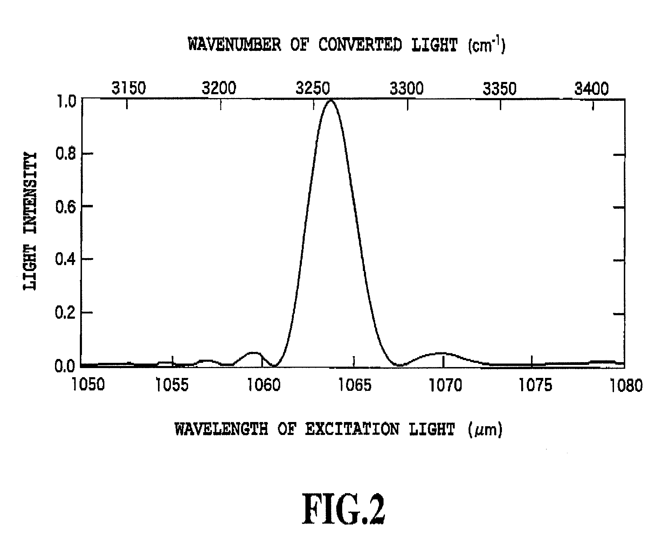

Fig. 2 illustrates phase matching curves when the wavelength conversion is performed in order to obtain mid-infrared light of $3.31\mu m$ by the generation of a difference frequency. Since the wavelength conversion device has a very narrow phase matching bandwidth, semiconductor laser oscillating with a single mode is desired in order to stably output converted light.

The wavelengths of $1.55\mu m$ and $1.31\mu m$ are in a long-wavelength region used in the optical communication field. A DFB laser diode that includes therein a diffraction grating and that oscillates with a single wavelength as a semiconductor laser can be applied to such wavelengths. On the other hand, it is very difficult to manufacture a DFB laser diode oscillating in a short wavelength region such as $0.98\mu m$, $1.06\mu m$, and $0.77\mu m$ and such lasers are required in a small amount. Thus, semiconductor laser generally is made of multimode oscillation-type laser diode. Thus, a fiber grating partially reflecting only a part of a specific wavelength is connected to the output of the semiconductor laser to allow a part of the output light to feed back the semiconductor laser again to control the oscillation wavelength so that the oscillation at the grating wavelength is achieved.

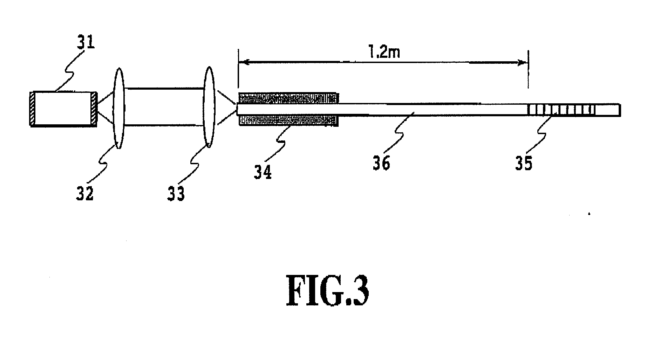

Fig. 3 illustrates the configuration of a conventional semiconductor laser module. A combination of a semiconductor laser diode (hereinafter referred to as LD) and a fiber grating (hereinafter referred to as FBG) is frequently arranged so that FBG is away from LD by a distance of about 1m or more (see Non-patent Publication 1 for example). The semiconductor laser module is composed of a laser diode 31 and a polarization maintaining fiber 36 having the FBG 35. Light emitted from the laser diode 31 is coupled to a polarization maintaining fiber 36 with ferrule 34 via lenses 32 and 33. The laser diode 31 emits laser light of a wavelength of 1064nm and the FBG 35 has a reflection bandwidth of 60pm. When assuming that a spacing between the laser diode 31 and the FBG 35 is 1.2m, the reflection bandwidth includes therein repeated reflection peaks appearing with a wavelength spacing of $0.27\mu m$ (which corresponds to the above resonance spacing of 1.2m).

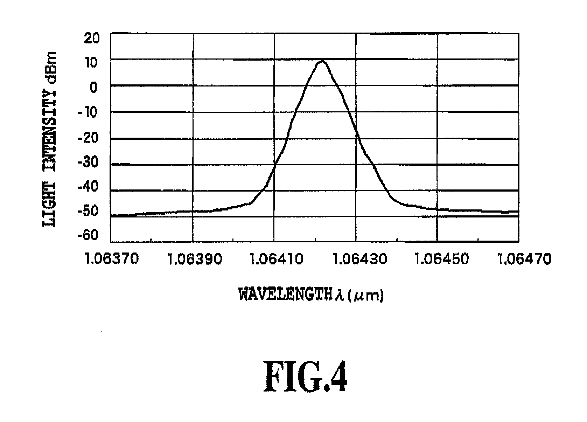

Fig. 4 shows the output spectrum of a light source obtained by combining a conventional laser diode and a fiber grating. The evaluation of the output spectrum by a light spectrum analyzer having a resolution of 10pm shows, as shown in Fig. 4, a single spectrum of a half value width of about 10pm at the center wavelength of $\lambda_1=1064nm$. In an actual case however, a temporal periodical output appears as a discontinuous output spectrum and the spectrum having a half value width of about 10pm has as many as 35 peaks to show a multimode status.

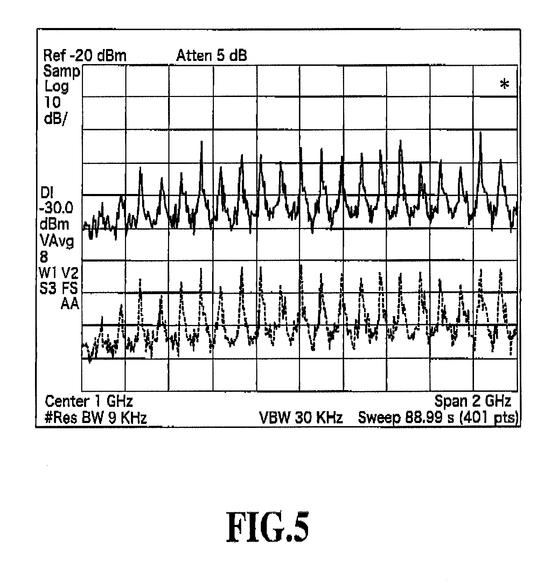

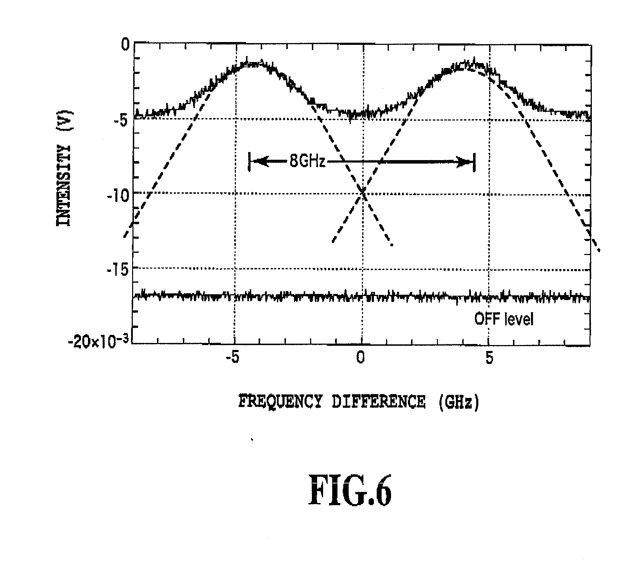

Fig. 5 shows the measurement result of the output spectra by an electric spectrum analyzer. The result shows reflection peaks at the position of a multiple of about 85MHz corresponding to a wavelength spacing of 0.27pm. Fig. 6 shows the measurement result of the output spectra by etalon. A Fabry-Perot etalon (FSR=8GHz, finesse=359) allowing high-resolution observation is used to observe the spectra. The result shows that the entire output spectrum is higher than that at the OFF level, showing a pseudo single mode where a plurality of single modes are superposed and appear as a single mode. Extrapolation lines drawn by dotted lines in order to roughly calculate a half value width shows a half value width of about 6GHz (up to 20pm) to show that the pseudo single mode is achieved electrically and optically.

A gas measuring device used for the measurement of environment gas must analyze neighboring gas absorption spectra that appear sharply. When an absorption spectrum width (hereinafter referred to as pressure width) that fluctuates depending on a gas pressure is directly observed for example, the mid-infrared light source may have a spectral linewidth of a pseudo single mode having a half value width of about 0.8pm (250MHz). Thus, the wavelength conversion apparatus shown in Fig. 1 is used to configure a gas measuring device.

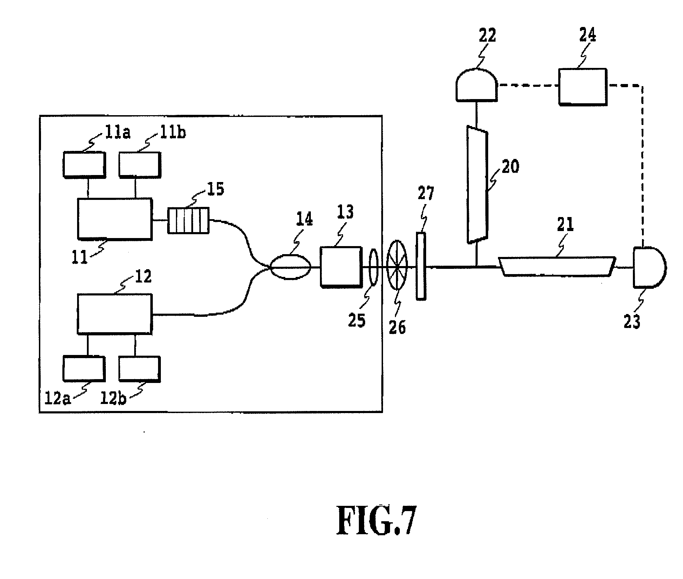

Fig. 7 shows the configuration of a conventional gas measuring device. The semiconductor laser 11 is a laser diode having a wavelength of $\lambda_A$=1064nm. The semiconductor laser 12 is DFB laser having a wavelength $\lambda_B$=1567nm. The wavelength conversion device 13 emits the converted light C of mid-infrared light having a wavelength $\lambda_c$=3314cnm. This converted light C is collimated by a lens 25 and is transmitted through a filter 27 for cutting the excitation light A and the signal light B and is subsequently branched to two paths. One of the beams is transmitted through a reference cell 20 to which no gas is filled and is subsequently subjected to the measurement by an optical receiver 22 with regards to the intensity of transmitted light. The other beam is transmitted through a gas cell 21 filled with methane gas (9Torr) and is subsequently subjected to the measurement of the intensity of transmitted light by an optical receiver 23. The two measurement results by the optical receivers 22 and 23 are subjected to a normalization processing by a calculation apparatus.

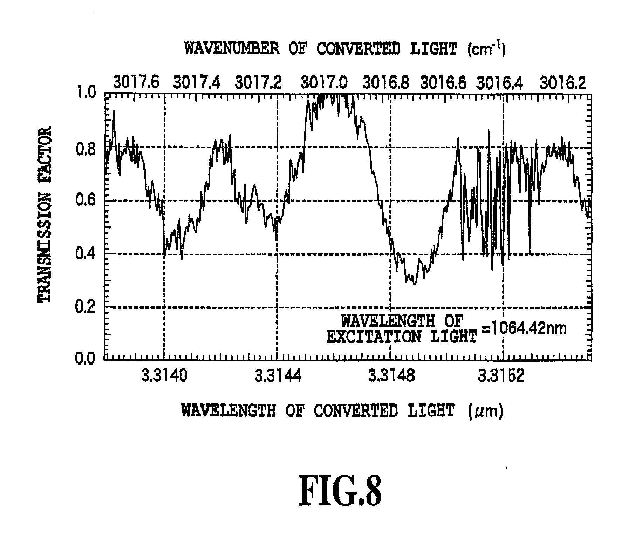

Then, a chopper 26 is used to modulate the beam transmitted the cells 20 and 21 with an ON/OFF modulation. The outputs from the optical receivers 22 and 23 are subjected to a lock-in detection by a lock-in amplifier 24 at a modulating frequency to improve the measurement sensitivity. The oscillation wavelength of the semiconductor laser 12 can be swept by the temperature to measure the absorption spectrum with the resolution of about 200pm (5. 6GHz at a wavelength of 3314nm). Fig. 8 shows the absorption line spectrum of the methane gas obtained by a conventional gas measuring device.

Since the wavelength conversion apparatus shown in Fig. 1 uses semiconductor laser, the wavelength conversion apparatus is a light source that is small, robust, and convenient to use. However, the wavelength conversion apparatus has insufficient resolution. Specifically, the pseudo single mode allowing the observation of a pressure width provides a wide spectral linewidth as described above. In the medicine application field, an absorption line of gas in breathing is observed and evaluated by an atmospheric pressure for example, thus requiring a linewidth of 2.2pm (600MHz) or more. In the industrial application field, an in-line monitor of gas flowing in a pipeline may be considered. In this case, an increased vacuum degree causes a low pressure and thus an absorption linewidth lower than 100MHz must be evaluated. The current linewidth of the semiconductor laser outputting excitation light has been not enough in these application fields to evaluate the target gas absorption linewidth accurately.

The spectral linewidth of the converted light significantly depends on oscillation linewidths of the two laser lights of excitation light and signal light. Semiconductor laser having a wavelength of 1.55μm that is used as signal light has an oscillation linewidth of 1MHz or lower in practical use. Thus, semiconductor laser outputting excitation light also must have an oscillation linewidth reduced to 1MHz or lower.

When semiconductor laser has a reduced linewidth as described above, a change in the environmental temperature causes a shift of the oscillation wavelength of semiconductor laser outputting excitation light. This has caused a disadvantage of the shift of the wavelength of converted light. The shift of the wavelength as described above has a significant influence on the measurement data accuracy because a measurement target is an inherent absorption spectrum with a fixed wavelength. Thus, it is required to generate the wavelength of converted light without causing an influence on the change in the environmental temperature.

It is an objective of the present invention to provide a light source and a gas measuring device that realize a single spectral linewidth equal to or lower than the half value width of 0.004pm (1MHz) and that are not influenced by a change in the ambient temperature.

Patent Publication 1: Japanese Patent Laid-Open No.2003-140214
Non-Patent Publication 1: A. Ferrari, et al., "Subkilohertz Fluctuations and Mode Hopping in High-Power Grating-Stabilized 980-nm Pumps, " IEEE J. of Lightwave Tech., vo1.20, pp.515-518, 2002/3

DISCLOSURE OF THE INVENTION

In order to achieve the objective as described above, a light source of the present invention comprises first laser generating first laser light, second laser generating second laser light, and nonlinear optical crystal wherein the first laser light and the second laser light are injected into the nonlinear optical crystal to generate coherent light by generation of a difference frequency or a sum frequency. The light source is **characterized in that** the second laser is a wavelength-tunable light source that includes therein a diffraction grating and that can sweep a wavelength of the second laser light. The first laser is composed of semiconductor laser and a fiber grating that has a reflection bandwidth narrower than a resonance wavelength spacing determined by an laser chip length of the semiconductor laser. The first laser light has a single spectral linewidth having a half value width of 1MHz or less.

This light source also can include: a monitor for measuring an ambient temperature; and a temperature control circuit that controls a set temperature of the second laser based on an ambient temperature measured by the monitor. This light source also can include: a monitor for measuring an ambient temperature; and a driving circuit that controls a driving current of the second laser based on an ambient temperature measured by the monitor. The first laser also can include a temperature control circuit that controls a set temperature of the fiber grating.

This light source also can include: a wavemeter that measures a wavelength of the first laser light outputted from the first laser; and a temperature control circuit that controls a set temperature of the second laser based on the wavelength measured by the wavemeter so that the first laser light has a desired wavelength. This light source also can include: a wavemeter that measures a wavelength of the first laser light outputted from the first laser; and a driving circuit that controls driving current of the second laser based on the wavelength measured by the wavemeter so that the first laser light has a desired wavelength.

The gas measuring device can include: the light source described the above; means for branching beam outputted from the light source to allow the branched beams to be transmitted through a reference cell and a gas cell; and optical receivers for receiving the beam transmitted through the reference cell and the gas cell. The gas measuring device also can include a cell retention apparatus retaining the reference cell and the gas cell.

BRIEF DESCRIPTION OF THE DRAWINGS

Fig. 1 illustrates the configuration of a conventional wavelength conversion apparatus using a pseudo phase matching-type wavelength conversion device.
Fig. 2 illustrates a phase matching curve when a difference frequency is generated to carry out a wavelength conversion.
Fig. 3 illustrates the configuration of a conventional semiconductor laser module.
Fig. 4 illustrates the output spectrum of a light source obtained by combining a conventional laser diode with a fiber grating.
Fig. 5 illustrates the measurement result of the output spectra by an electric spectrum analyzer.
Fig. 6 illustrates the measurement result of the output spectra by etalon.
Fig. 7 illustrates the configuration of a conventional gas measuring device.
Fig. 8 illustrates the absorption line spectrum of methane gas obtained by a conventional gas measuring device.
Fig. 9 illustrates the configuration of a semiconductor laser module according to one embodiment of the present invention.
Fig. 10 illustrates the output spectrum of the semiconductor laser module according to one embodiment of the present invention.
Fig. 11 illustrates the measurement result of the output spectra by the electric spectrum analyzer.
Fig. 12 illustrates the measurement result of the output spectrum by etalon.
Fig. 13 illustrates the measurement result of the output spectrum by the Delayed Self-Heterodyne Technique.
Fig. 14 illustrates the configuration of a gas measuring device according to Embodiment 1 of the present invention.
Fig. 15 illustrates the absorption line spectrum of methane gas obtained by the gas measuring device according to Embodiment 1.
Fig. 16 illustrates the configuration of a gas measuring device according to Embodiment 2 of the present invention.
Fig. 17 illustrates the dependency of an oscillation wavelength of semiconductor laser outputting signal light on the ambient temperature.
Fig. 18 illustrates the dependency of the oscillation wavelength of a semiconductor laser module outputting excitation light on the ambient temperature.
Fig. 19 illustrates the configuration of a semiconductor laser module according to Embodiment 3 of the present invention.

Fig. 20 illustrates the dependency of the oscillation wavelength of a laser diode outputting excitation light on the ambient temperature.

Fig. 21 illustrates the configuration of a gas measuring device according to Embodiment 4 of the present invention.

Fig. 22 illustrates the configuration of a gas measuring device according to Embodiment 5 of the present invention.

Fig. 23 illustrates the configuration of a gas measuring device according to Embodiment 6 of the present invention.

Fig. 24 illustrates the absorption line spectrum of gas obtained by the gas measuring device.

BEST MODE FOR CARRYING OUT THE INVENTION

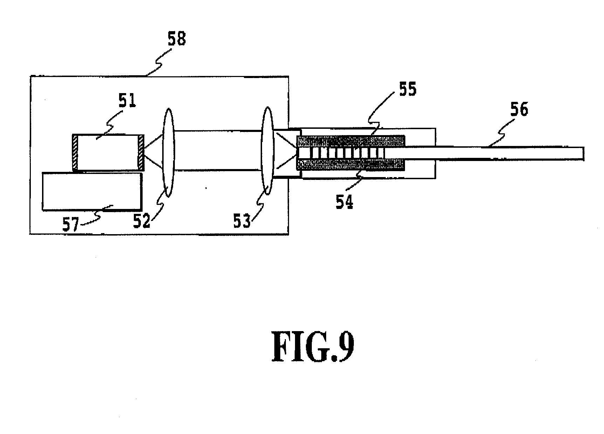

Hereinafter, embodiments of the present invention will be described in detail with reference to the drawings. Fig. 9 illustrates the configuration of a semiconductor laser module according to one embodiment of the present invention. The semiconductor laser module is composed of: a laser diode 51 and a polarization maintaining fiber 56 having an FBG 55. Light emitted from the laser diode 51 is coupled to the polarization maintaining fiber 56 with ferrule 54 via lenses 52 and 53. The temperature of the laser diode 51 is maintained at a fixed temperature by a Peltier element 57.

The laser diode 51 emits laser light of a wavelength of 1064nm. The laser chip length is $1200\mu m$ and the resonance wavelength spacing is 124pm. The reflectivity at an end facet of the laser diode 51 is determined so that a side facing to the polarization maintaining fiber 56 has a reflectivity of 0.1% and the opposite side has a reflectivity of 90%. The FBG 55 and the ferrule 54 are placed in a housing 58 of the module. A spacing between the laser diode 51 and the FBG 55 is 2cm. The FBG 55 has a reflection bandwidth of 60pm and a reflectivity of 20%. The FBG 55 has a reflection bandwidth narrower than the resonance wavelength spacing determined by the laser chip length of the laser diode 51. Thus, only one resonance mode defined by the reflection between both end facets of the laser diode 51 is selected, thus providing the oscillation with a single mode.

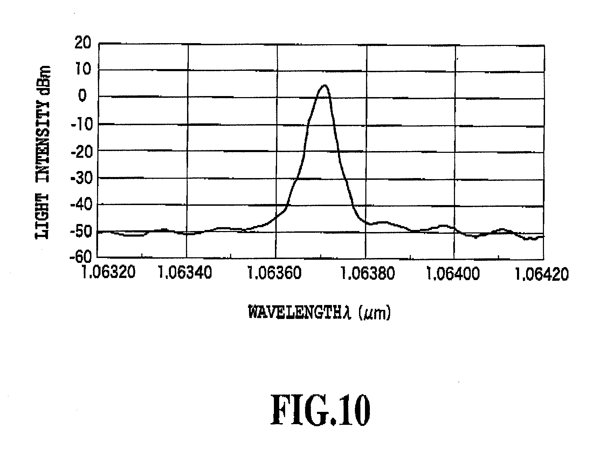

Fig. 10 illustrates the output spectrum of the semiconductor laser module according to one embodiment of the present invention. As shown in Fig. 10, the single spectrum having a full width at half maximum of about 10pm and the center wavelength $\lambda$=1064nm is observed by an optical spectrum analyzer with the resolution of 10pm. When Fig. 10 is compared with Fig. 4, the spectrum of Fig. 10 shows a narrower skirt than that of Fig. 4, showing that the entire spectrum of this embodiment is sharper.

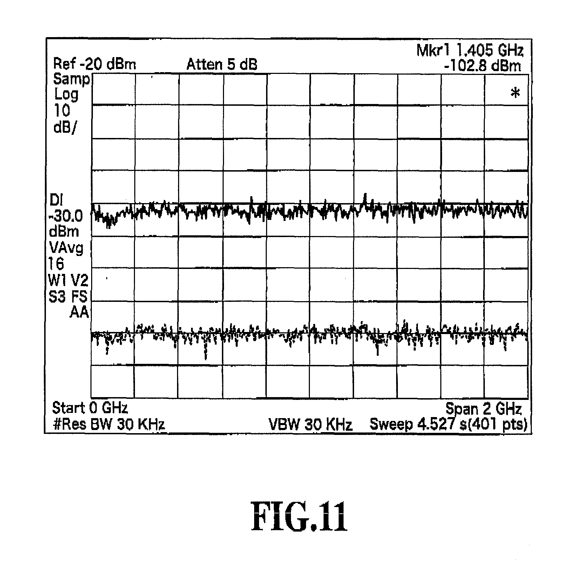

Fig. 11 illustrates the measurement result of the output spectra by an electric spectrum analyzer. The spacing between the rear facet of the laser diode 51 (opposite side of FBG) and the FBG 55 has an optical length of about 2.4cm. Thus, the repeated reflection peak will appear in the reflection bandwidth with a wavelength spacing of 23pm (about 6GHz). However, since the electric spectrum analyzer has a measurement band of 0 to 2GHz, a mode corresponding to this reflection peak is not observed.

Since this wavelength spacing is narrower than the reflection bandwidth of the FBG 55, two modes may be selected. When one of the modes corresponds to the resonance mode by a spacing between both end facets of the laser diode 51, an oscillation threshold value is reduced and thus the oscillation is easily realized. Thus, the oscillation with the single mode can be substantially provided by reducing the reflectivity of the front facet (FBG-side) of the laser diode 51 to 0.1% or lower.

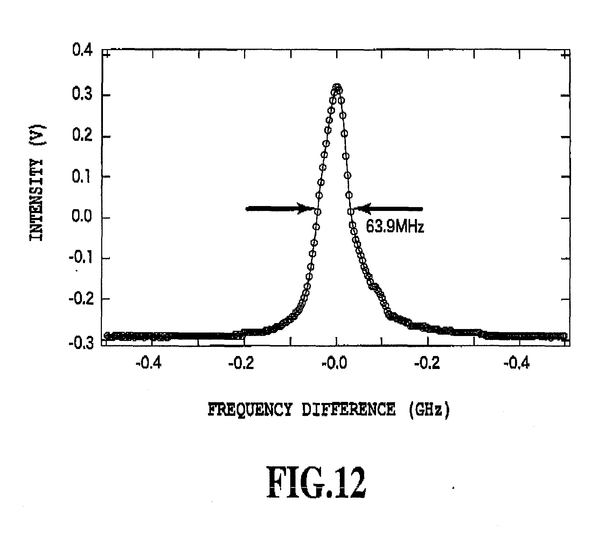

Fig. 12 illustrates the measurement result by the output spectrum by etalon. As can be seen from Fig. 12, the spectrum shows a complete single mode having half value width of about 64MHz (0.24pm) electrically and optically. The Fabry-Perot etalon (FSR=8GHz, finesse=359) has a resolution of about 23MHz that is on substantially the same order. Thus, it also may be considered that an actual linewidth is further narrower.

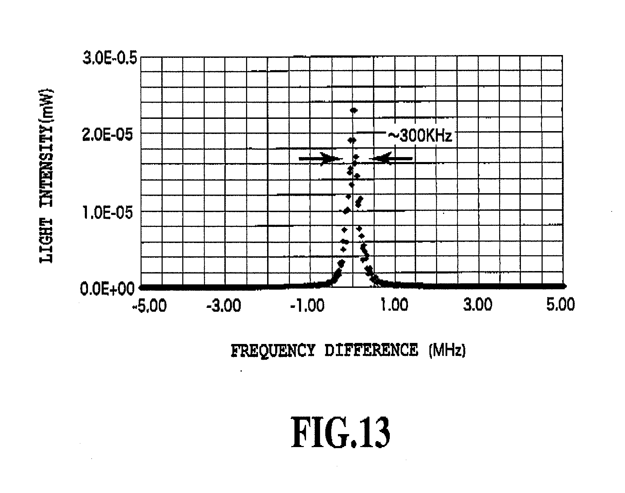

Fig. 13 shows the measurement result of the output spectrum by the Delayed Self-Heterodyne Technique. In the Delayed Self-Heterodyne Technique, the output from the semiconductor laser module is divided to two parts and one of the divided output is connected to optical fiber of 5km. The other of the divided output is connected to an Acoust-Optical (AO) modulator to shift the oscillation frequency by 100MHz. These two outputs are multiplexed again to generate beat light at 100MHz. When the beat light is observed, a linewidth of about 300kHz is obtained.

Embodiment 1

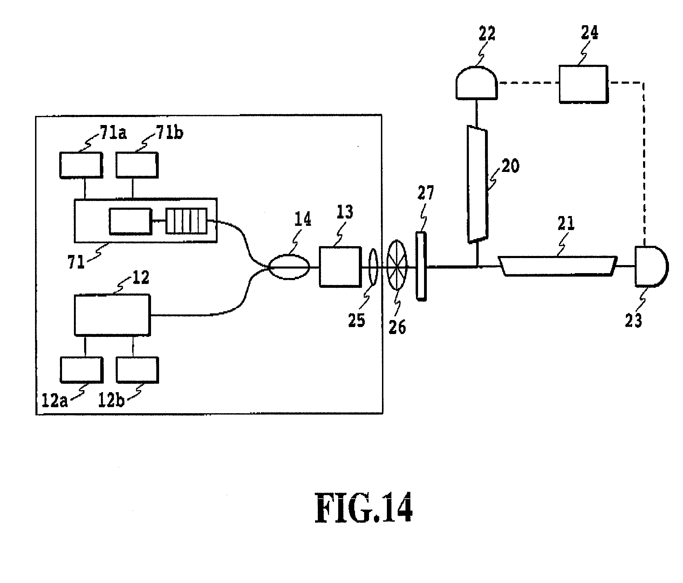

Fig. 14 illustrates a gas measuring device according to Embodiment 1 of the present invention. This gas measuring device is obtained by designing the gas measuring device shown in Fig. 7 so that a light source obtained by combining the semiconductor laser 11 and the FBG 15 in the wavelength conversion apparatus is substituted with a semiconductor laser module shown in Fig. 9. The semiconductor laser 12 corresponding to the first laser is DFB laser that can sweep a wavelength. The semiconductor laser module 71 corresponding to the second laser, as described above, has a single spectral linewidth having a half value width of 250MHz or less. The wavelength conversion device 13 is made of nonlinear optical crystal of 50mm long, a polling period of $28.4\mu m$, and a conversion efficiency of 40%/W.

The mid-infrared light, which is the converted light C emitted from the wavelength conversion device 13, is collimated by the lens 25 and is transmitted through the filter 27 for cutting the excitation light A and the signal light B and is subsequently branched to two paths. One of the beams is transmitted through the reference cell 20 not filled with gas and is subsequently subjected to the measurement of the intensity of the transmitted light by the optical receiver 22. The other beam is transmitted through the gas cell 21 filled with methane gas (9Torr, 20cm) and is subjected to the measurement of the intensity of the transmitted light by the optical receiver 23. The two measurement results by the optical receivers 22 and 23 are subjected to a normalization processing by a calculation apparatus. The optical receivers 22 and 23 are a PbSe photoconductive detector. In order to improve the measurement sensitivity, the lock-in detection is performed as in the conventional case.

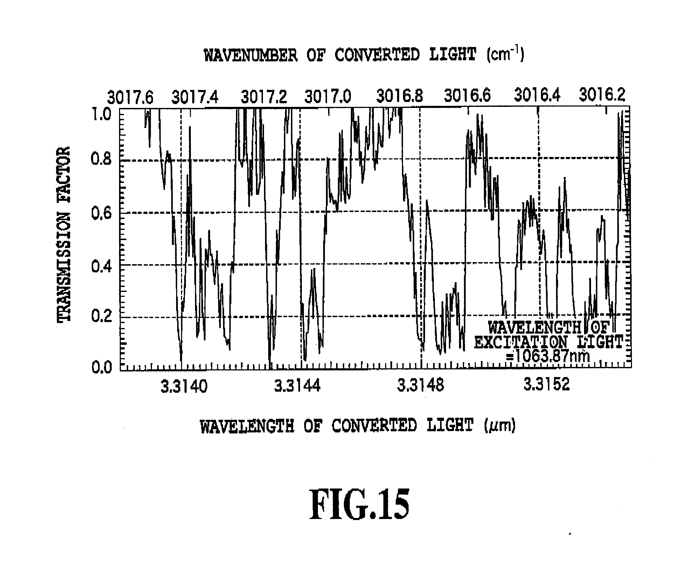

Fig. 15 illustrates the absorption line spectrum of methane gas obtained by the gas measuring device according to Embodiment 1. The oscillation wavelength of the semiconductor laser 12 is swept by the temperature to sweep the wavelength by an increment of 1pm. When the gas measuring device according to Embodiment 1 is compared with the conventional gas measuring device of Fig. 8, the structure of the spectra of 20pm or less can be clearly observed individually. This comparison shows that the resolution can be quantitatively improved 25 times higher than the conventional case.

When assuming that the DFB laser used as the semiconductor laser 12 has a shift of $\Delta\lambda_1$ of an oscillation wavelength of $\lambda=1567$nm, a shift $\Delta\lambda_3$ of the wavelength $\lambda_3$ of the converted light of mid-infrared light is generated. In this case, the wavelength $\lambda_3$ of the converted light is given by the following formula. ($\lambda_3=3314$nm)

$$1/\lambda_3=1/\lambda_1-1/\lambda_2 \qquad \text{(formula 1)}$$

It is assumed that the semiconductor laser module 71 has the oscillation wavelength $\lambda_2=1064$nm. Based on the formula 1, the wavelength shift $\Delta\lambda_3$ of the converted light is given by the following formula.

$$\Delta\lambda_3 \sim \Delta\lambda_1 \times (\lambda_3/\lambda_1)^2 \qquad \text{(formula 2)}$$

When assuming that $\Delta\lambda_1=1$pm, $\Delta\lambda_3=4.5$pm is obtained. Thus, in order to determine the reflection peak as a peak, at least five measurement points are required. Thus, the resolution is limited to 20pm. Needless to say, when the wavelength scanning step of the semiconductor laser 12 is reduced to be narrower than an increment of 1pm, the mid-infrared light has a further-reduced wavelength step and thus the resolution can be reduced.

Embodiment 2

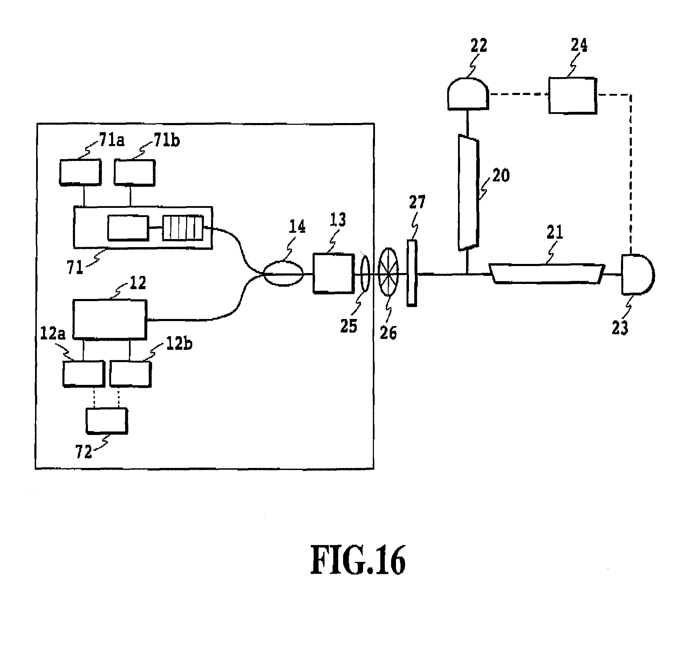

Fig. 16 illustrates the configuration of a gas measuring device according to Embodiment 2 of the present invention. This gas measuring device is structured so that an ambient temperature monitor 72 is added to the gas measuring device according to Embodiment 1 shown in Fig. 14. The ambient temperature monitor 72 is connected to a driving circuit 12a and a temperature control circuit 12b and feeds back the information regarding the ambient temperature of a light source.

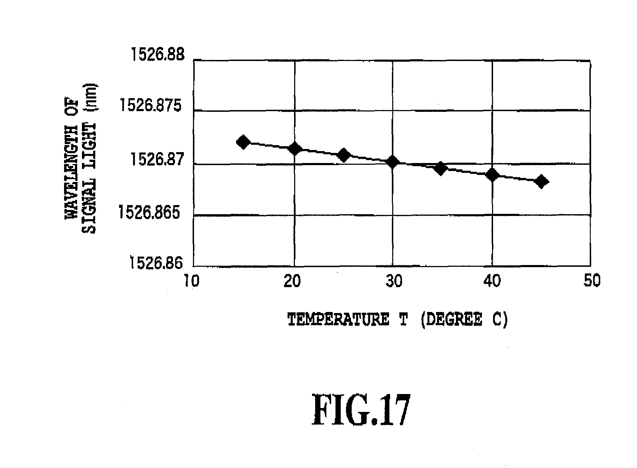

Fig. 17 illustrates the dependency of an oscillation wavelength of semiconductor laser outputting signal light on the ambient temperature. The DFB laser used as the semiconductor laser 12 has the oscillation wavelength $\lambda_1=1567$nm that is determined by bragg grating included therein. When the ambient temperature is changed within a range from 15 degrees Celsius to 45 degrees Celsius, the oscillation wavelength shift $\Delta\lambda_1=-4$pm of the semiconductor laser 12 is caused. In this case, the wavelength shift $\Delta\lambda_3$ of the converted light to the long wavelength side is measured as 17.9pm by the following formula.

$$\Delta\lambda_3 \sim -\Delta\lambda_2 \times (\lambda_3/\lambda_2)^2 \qquad \text{(formula 3)}$$

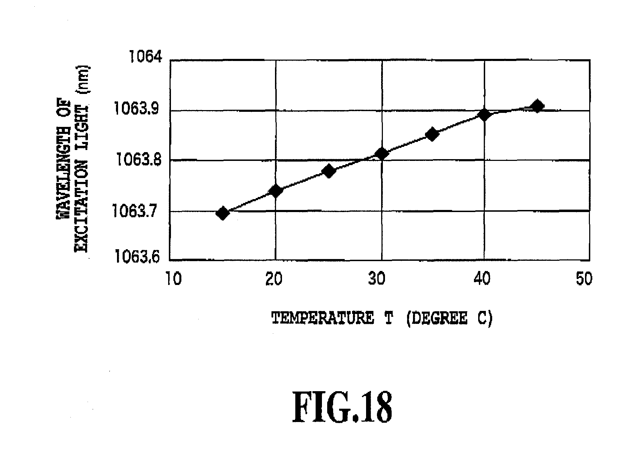

Fig. 18 illustrates the dependency of the oscillation wavelength of a semiconductor laser module outputting excitation light on the ambient temperature. The semiconductor laser module 71 has the oscillation wavelength $\lambda_2=1064$nm that is determined by the FBG 55. When the ambient temperature is changed from 15 degrees Celsius to 45 degrees Celsius, the selected wavelength $\Delta\lambda_1$ of the FBG 55 is changed by 0.21nm in almost linearly proportion and is changed to the long wavelength-side. Consequently, the change in the ambient temperature has a very high influence on $\Delta\lambda_3$. In this case, the wavelength shift $\Delta\lambda_3$ of converted light is given by (formula 2) and is estimated as 2.04nm to the long wavelength-side. Consequently, the wavelength of the converted light is shifted to the long wavelength-side by (2.04+0.0179)nm $\fallingdotseq$ 2.06nm.

When this wavelength shift is applied to the absorption line spectrum shown in Fig. 15, the wavelength of the light source can be changed by -2.06nm to the long wavelength-side and thus exceeds the scale range of Fig. 15. Since the absorption line spectrum of methane gas itself does not change, a change in the ambient temperature requires the DFB laser to have a different oscillation wavelength $\Delta\lambda_1$. Thus, in order to allow the methane gas of the light source to be within the scale range of Fig. 15, the following formula is used.

$$\Delta\lambda_2 \sim -\Delta\lambda_3 \times (\lambda_2/\lambda_3)^2 \qquad\qquad (\text{formula 4})$$

This formula is used to estimate that the DFB laser has the wavelength shift $\Delta\lambda_2$=0.429nm. Depending on whether the ambient temperature is 15 degrees Celsius or 45 degrees Celsius, the oscillation wavelength of the DFB laser must be changed to the short wavelength-side by 429pm. The DFB laser used as the semiconductor laser 12 has a temperature coefficient of 0.1nm/degree C. Thus, the set temperature of the semiconductor laser 12 is increased by 4.3 degrees Celsius. This can consequently provide a substantially-fixed wavelength of the light source of the gas measuring device. So long as the evaluation result is within the scale range, the correction based on an inherent absorption spectrum in gas can be performed.

In addition to the temperature of the DFB laser outputting signal light, the set current also can be changed to set the wavelength with a rate of 10pm/mA. According to this method, the set current changed by 1mA can provide a fine adjustment by about one digit than in the case where the temperature is changed by 1 degree C.

In the manner as described above, even when the ambient temperature is changed, the feedback from the ambient temperature monitor 72 to the driving circuit 12a or the temperature control circuit 12b is used to cause a change both in the driving current or the set temperature. As a result, the wavelength $\lambda_3$ of the output light from the light source of the gas detection apparatus can be scanned with a fixed wavelength range and stable power.

Embodiment 3

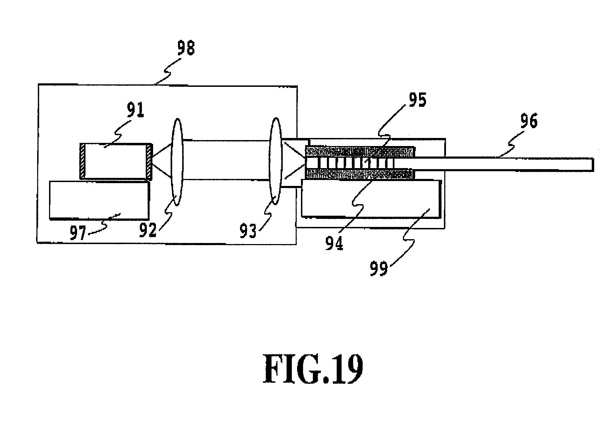

Fig. 19 illustrates the configuration of a semiconductor laser module according to Embodiment 3 of the present invention. The semiconductor laser module is composed of: a laser diode 91; and polarization maintaining fiber 96 having an FBG 95. Light emitted from the laser diode 91 is coupled to the polarization maintaining fiber 96 with ferrule 94 via lenses 92 and 93. The temperature of the laser diode 91 is maintained at a fixed temperature by a Peltier element 97. The temperature of the FBG 95 is fixed at a fixed temperature by a Peltier element 99.

The laser diode 91 emits laser light having a wavelength of 1064nm. The FBG 95 and the ferrule 94 are provided in a housing 98 of the module. The spacing between the laser diode 91 and the FBG 95 is 2cm. The FBG 95 has a reflection bandwidth of 60pm and a reflectivity of 20%. When the ambient temperature changes from 15 degrees Celsius to 45 degrees Celsius, the oscillation wavelength is shifted by 0.21nm as shown in Fig. 18. To solve this, a Peltier element 99 is mounted so that only the temperature of the FBG 95 can be controlled.

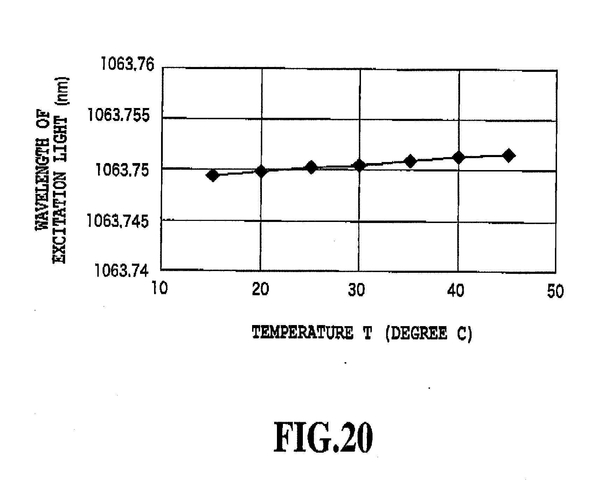

Fig. 20 illustrates the dependency of the oscillation wavelength of a laser diode outputting excitation light on the ambient temperature. When the ambient temperature is changed from 15 degrees Celsius to 45 degrees Celsius, the selected wavelength $\Delta\lambda_2$ of the FBG 95 changes by only 2pm, achieving 1/100 reduction when compared with a case of Fig. 18. In this manner, even when the ambient temperature is changed, the absorption line spectrum can be measured within a fixed wavelength range.

Embodiment 4

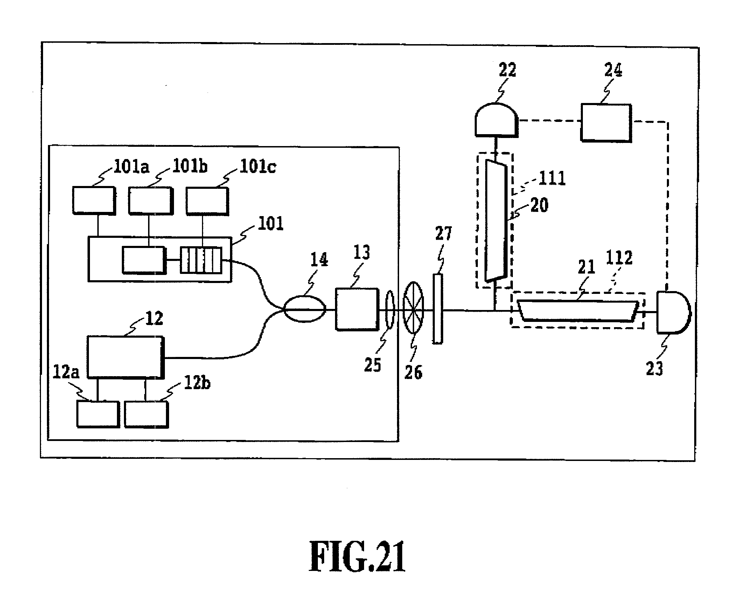

Fig. 21 illustrates the configuration of a gas measuring device according to Embodiment 4 of the present invention. This gas measuring device is obtained by designing the gas measuring device shown in Fig. 14 so that the semiconductor laser module 71 shown in Fig. 9 is substituted with a semiconductor laser module 101 shown in Fig. 19. This gas measuring device is also provided so that the reference cell 20 and the gas cell 21 are retained by gas cell retention apparatuses 111 and 112, respectively. The existence of the gas cell retention apparatuses 111 and 112 allows a cell to be exchanged without requiring an adjustment of an optical axis. Thus, an arbitrary gas absorption line spectrum can be evaluated.

Embodiment 5

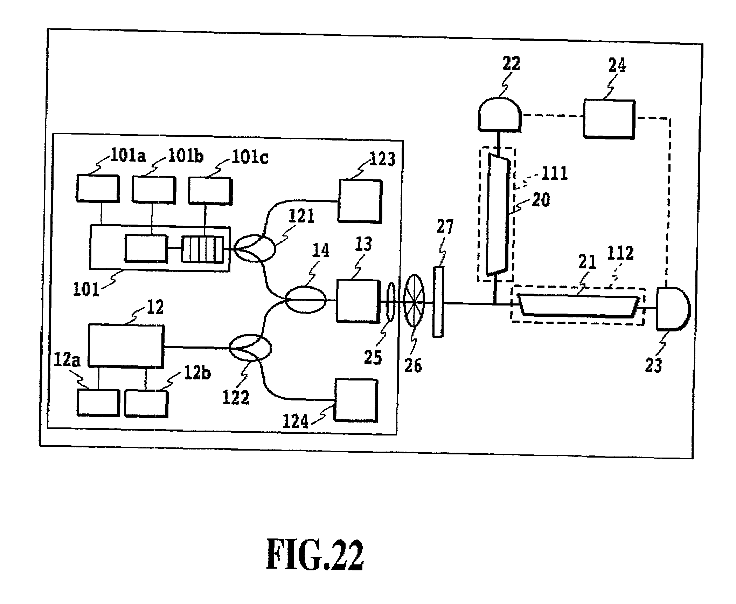

Fig. 22 illustrates the configuration of a gas measuring device according to Embodiment 5 of the present invention. In order to measure the oscillation wavelength of the semiconductor laser module 101, the semiconductor laser module 101 and the optical coupler 14 have therebetween a optical coupler 121 having a branching ratio of 10:1. The side of the optical coupler 121 branched to 1/10 is connected to a wavemeter 123. In order to measure the oscillation wavelength of the semiconductor laser 12, the semiconductor laser 12 and the optical coupler 14 also have therebetween a optical coupler 122 having a branching ratio of 10:1. The side of the optical coupler 122 branched to 1/10 is connected to a wavemeter 124.

By the wavemeter 123 and the wavemeter 124, a change from a desired wavelength is detected to feed back the result to a driving circuit 101a, temperature control circuits 101b and 101c, the driving circuit 12a, and the temperature control circuit 12b, respectively. As a result, even when the ambient temperature changes to cause a change in the oscillation wavelengths of the semiconductor laser module 101 and the semiconductor laser 12, the driving current and the set temperature are changed. As a result, the output from the light source can be controlled to have a desired wavelength and the absorption line spectrum can be measured within a fixed wavelength range.

Embodiment 6

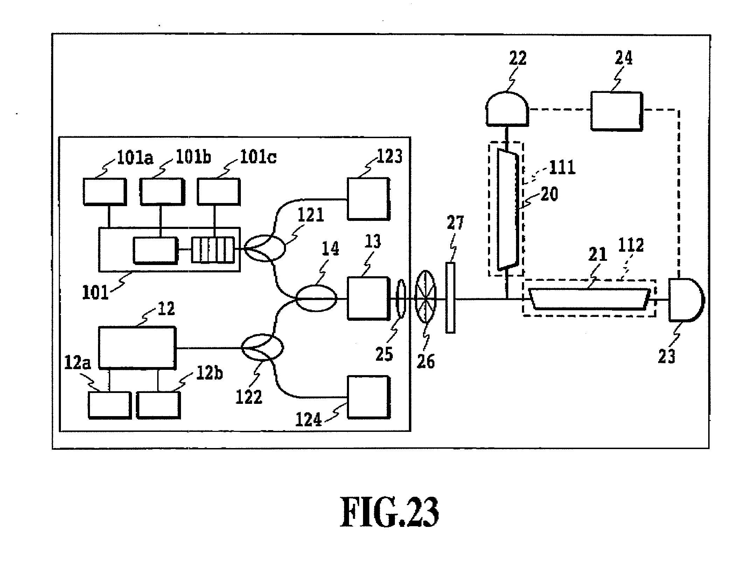

Fig. 23 illustrates the configuration of a gas measuring device according to Embodiment 6 of the present invention. The semiconductor laser module 101 and the optical coupler 14 have therebetween an optical switch 133 and a light source obtained by combining a semiconductor laser 131 operating with a pseudo multimode with an FBG 132 is connected. Since the pseudo multimode provides a wide band, the resolution becomes worse. When the ambient temperature is changed, a wide envelope curve can be observed. Thus, the deviation of the wavelength of the light source due to the temperature fluctuation is measured in advance.

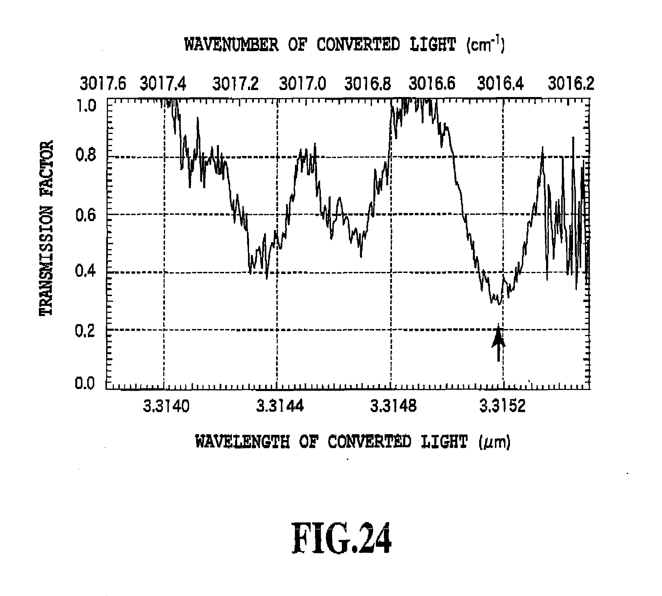

For example, an absorption line spectrum of gas measured under a certain environment is shown in Fig. 24. The reason why this result deviates from the result shown in Fig. 8 is that semiconductor laser outputting excitation light and signal light is used without considering the fluctuation of the ambient temperature. Since a measurement device that can directly measure the absorption line wavelength of gas has not been developed, the absorption line wavelength of gas is corrected by referring to a HITRAN database for example. The result is that the wavelength shown by the arrow in Fig. 24 is shifted by about 0.3nm. Consequently, it is estimated that the ambient temperature is sifted by about 5 degrees Celsius to cause a shift of the wavelength of the excitation light by about 30pm. When this fluctuation of the ambient temperature is considered and the scanning is performed with high-resolution laser 101, the wavelength of the signal light can be shifted based on the formula 4 to obtain the result shown in Fig. 15.

Depending on the ambient temperature, the driving circuit 101a or the temperature control circuits 101b and 101c is used to change the driving current or the set temperature of the semiconductor laser module 101. As a result, the wavelength $\lambda_3$ of the output light from the light source of the gas detection apparatus can be scanned with a fixed wavelength range and stable power.

INDUSTRIAL APPLICABILITY

Of course, when a wavelength-tunable light source is used instead of the semiconductor laser modules 71 and 101, the resultant gas measuring device would be large but the wavelength sweep width can be expanded to measure the absorption spectrum. In these embodiments, the evaluation was performed in a wavelength of 3.3$\mu$m of methane gas. When lithium niobate is used as nonlinear optical crystal for example however, converted light of an arbitrary wavelength can be generated in a wavelength of 0.35 to 5$\mu$m in the transparency region thereof.

In the semiconductor laser module of these embodiments, the laser diode is coupled to the FBG by two lenses. However, another coupling method not using such lenses or a lens (e.g., a coupling method using hemispherically-ended fiber or a V-like groove) also can be used.

**Claims**

1.  A light source comprising first laser generating first laser light, second laser generating second laser light, and nonlinear optical crystal wherein the first laser light and the second laser light are injected into the nonlinear optical crystal to generate coherent light by generation of a difference frequency or a sum frequency,
    wherein the second laser is a wavelength-tunable light source that includes therein a diffraction grating and that can sweep a wavelength of the second laser light,
    the first laser is composed of semiconductor laser and a fiber grating that has a reflection bandwidth narrower than a resonance wavelength spacing determined by an laser chip length of the semiconductor laser, and
    the first laser light has a single spectral linewidth having a half value width of 1MHz or less.

2.  The light source according to claim 1, further comprising:

a monitor for measuring an ambient temperature; and
a temperature control circuit that controls a set temperature of the second laser based on an ambient temperature measured by the monitor.

3. The light source according to claim 1, further comprising:

a monitor for measuring an ambient temperature; and
a driving circuit that controls a driving current of the second laser based on an ambient temperature measured by the monitor.

4. The light source according to claim 1, 2 or 3, wherein the first laser further includes a temperature control circuit that controls a set temperature of the fiber grating.

5. The light source according to claim 1, further comprising:

a wavemeter that measures a wavelength of the first laser light outputted from the first laser; and
a temperature control circuit that controls a set temperature of the second laser based on the wavelength measured by the wavemeter so that the first laser light has a desired wavelength.

6. The light source according to claim 1, further comprising:

a wavemeter that measures a wavelength of the first laser light outputted from the first laser; and
a driving circuit that controls driving current of the second laser based on the wavelength measured by the wavemeter so that the first laser light has a desired wavelength.

7. A gas measuring device comprising:

the light source according to any of claims 1 to 6;
means for branching beam outputted from the light source to allow the branched beams to be transmitted through a reference cell and a gas cell; and
optical receivers for receiving the beam transmitted through the reference cell and the gas cell.

8. The gas measuring device according to claim 7, further comprising a cell retention apparatus retraining the reference cell and the gas cell.

**FIG.1**

WAVENUMBER OF CONVERTED LIGHT (cm⁻¹)

FIG.2

FIG.3

FIG.4

**FIG.5**

**FIG.6**

FIG.7

WAVENUMBER OF CONVERTED LIGHT (cm⁻¹)

FIG.8

FIG.9

FIG.10

Ref -20 dBm    Atten 5 dB                    Mkr1 1.405 GHz
                                                  -102.8 dBm
Samp
Log
10
dB/
                                                     *

DI
-30.0
dBm
VAvg
16
W1 V2
S3 FS
    AA

Start 0 GHz                                    Span 2 GHz
#Res BW 30 KHz          VBW 30 KHz   Sweep 4.527 s(401 pts)

## FIG.11

20

FIG.12

FIG.13

**FIG.14**

FIG.15

# FIG.16

FIG.17

FIG.18

**FIG.19**

**FIG.20**

FIG.21

**FIG.22**

FIG.23

FIG.24

**INTERNATIONAL SEARCH REPORT**

| International application No. |
| --- |
| PCT/JP2007/062438 |

| A. CLASSIFICATION OF SUBJECT MATTER |
| --- |
| *G02F1/37*(2006.01)i, *G01N21/39*(2006.01)i |

According to International Patent Classification (IPC) or to both national classification and IPC

| B. FIELDS SEARCHED |
| --- |
| Minimum documentation searched (classification system followed by classification symbols) |
| G02F1/37, G01N21/39 |

| Documentation searched other than minimum documentation to the extent that such documents are included in the fields searched |
| --- |
| Jitsuyo Shinan Koho    1922-1996   Jitsuyo Shinan Toroku Koho  1996-2007 <br> Kokai Jitsuyo Shinan Koho  1971-2007   Toroku Jitsuyo Shinan Koho  1994-2007 |

| Electronic data base consulted during the international search (name of data base and, where practicable, search terms used) |
| --- |
| IEEE JSTPlus(JDream2) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | WO 2005/012996 A1 (Nippon Telegraph And Telephone Corp.),<br>10 February, 2005 (10.02.05),<br>& US 2006/13270 A1    & EP 1650597 A1 | 1<br>2-8 |
| Y | OHARA, S. et al. Performance of fiber Bragg grating stabilized 980nm diode laser pumped Differnce Frequency Generation as an efficient spectroscopic source, LEOS 2001,Vol.2 (2001), p.869-870 | 1-8 |
| A | JP 10-206917 A (Oki Electric Industry Co., Ltd.),<br>07 August, 1998 (07.08.98),<br>(Family: none) | 1-8 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>13 September, 2007 (13.09.07) | Date of mailing of the international search report<br>25 September, 2007 (25.09.07) |
| --- | --- |
| Name and mailing address of the ISA/<br>   Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003140214 A

### Non-patent literature cited in the description

- **A. FERRARI et al.** Subkilohertz Fluctuations and Mode Hopping in High-Power Grating-Stabilized 980-nm Pumps. *IEEE J. of Lightwave Tech,* March 2002, vol. 1.20, 515-518